# EUROPEAN PATENT APPLICATION

(11) **EP 2 028 610 A1**
(43) Date of publication of application: **25.02.2009**
(21) Application number: 07016575.8
(22) Date of filing: 23.08.2007
(51) Int. Cl.: G06Q 10/00

(54) **A method for executing a process based on an XML process language, particularly a process based on the BPEL language**

(71) Applicant: SIEMENS AKTIENGESELLSCHAFT, 80333 München (DE)
(72) Inventor: Zaid, Farid, 64347 Griesheim (DE)

(57) **Abstract**

The invention refers to a method for executing a process based on an XML process language, particularly a process based on a BPEL language. According to an embodiment of the invention, a BPEL engine executing a BPEL process is interacting with a rule engine including ECA rules. Those rules automatically perform an action in response to an event provided that a corresponding condition holds. The rule engine processes events generated in the BPEL engine, the events referring to changes of states of activities in the BPEL process. The rules are preferably defined such that certain QoS parameters are fulfilled while applying the rules. For example, in case that the response time of a completed activity exceeds a threshold, a corresponding rule will instruct the BPEL engine to rebind to another web service for executing the activity when the activity starts the next time. The invention has the advantage to provide an easy implementation of QoS requirements by the use of a rule engine in a BPEL process without changing the scripts of a BPEL process. Hence, there is no need to stop a BPEL process when modifying QoS requirements.

## Description

A method for executing a process based on an XML process language, particularly a process based on the BPEL language

The invention relates to a method for executing a process based on an XML process language (XML = Extensible Markup Language), particularly a process based on the BPEL language (BPEL = Business Process Execution Language).

XML based languages are widely used to describe processes to be executed by corresponding services, e.g. web services. A well-known example of such an XML based language is the BPEL language being used to describe business processes. In a BPEL process, an activity is executed by a web service which matches specific functional requirement of the corresponding activity. Those requirements are described in the so-called Web Services Description Language (WSDL) interface.

In the BPEL language, there are three mechanisms in order to bind an activity to a corresponding web service. In one binding scheme, static design-time binding is used, i.e. the activity is bound to a specific service at design time. This is the least flexible form of binding because the whole business process fails if the assigned service fails at runtime.

In another binding scheme, dynamic binding using lookups is used. In this alternative, the activity is bound at runtime to a service from a set of services predefined at design time. However, this binding scheme makes the whole process subject to failures if all predefined services fail. Moreover, this mechanism does not take into account other services which may appear at runtime with better quality levels. Thus, dynamic binding is not an optimal execution of a business workflow.

Another variant of a binding scheme specified in the BPEL language is dynamic binding using passed-in endpoints. According to this scheme, a partner web service called principal sends the address of a service that will execute the corresponding activity. This solution has the drawback that the binding scheme fails in case that the principal partner itself fails.

Another option is to use the so-called BPEL fault handler specifying procedures or a set of activities to recover from a detected faulty condition, e.g. a failing web service. However, this solution has considerable limitations. Particularly, only faults predefined for a web service can be handled. Therefore, if a service fails for a reason other than the predefined one, the fault cannot be handled properly. Furthermore, the fault handler does not cater for transient condition in the operational environment, e.g. in case that a network connection is shortly lost or a partner web service is not available for a short time. Moreover, the fault handler does not allow a fine control of a quality-based behaviour and the designer of a BPEL process has to provide fault handlers for all anticipated faults, obviously resulting in high programming effort.

There are also proprietary methods to enhance the BPEL fault handler. Those solutions also have drawbacks, particularly the backup services used when a fault occurs have to be specified at design time and hard-coded in the BPEL process descriptor file. Furthermore, if business terms or application requirements change, the process descriptor has to be reedited having the undesirable consequence that the whole BPEL application has to be stopped.

Therefore, it is an object of the invention to provide a method for executing an XML based process, particularly a BPEL process, enabling an easy and straightforward adjustment of the process during runtime.

This object is solved by the independent claims. Preferred embodiments of the invention are defined in the dependent claims.

The process executed by the method according to the invention is handled by a process engine being an executable software environment running on a computer. The process includes a plurality of activities, each activity being executed by a corresponding service and changing its states during execution. According to the invention, one or more events referring to a change of the state of an activity are detected by the process engine, at least one of said events being associated with a language element including a rule identification from a plurality of rule identifications. The language element forms an extension of the process language and, as an example, the rebinding element may be used which is defined in European patent application No. 07014545.3 filed by the same applicant as the present application. The whole disclosure of the former application is incorporated by reference in the present application.

Upon detection of at least one event associated with the above-described language element, the at least one event is communicated to a rule engine, wherein the rule engine is a executable software environment on a computer which manages one or more sets of rules, each set of rules including at least one rule and being specified by a rule identification from the plurality of rule identifications.

Upon communication of the at least one event to the rule engine, a set of rules is applied on the process, the applied set of rules being that set of rules specified by the rule identification included in the language element with which the at least one event is associated. The combination of a process engine executing the process with a rule engine enables an easy adaptation of the process by changing the rules in the rule engine without the need to stop the process. Furthermore, the invention makes use of events in order to gather information about the execution state of the process and react to them by corresponding criteria.

In a preferred embodiment of the invention, the states of an activity include one or more of the following states:
- inactive, i.e. the activity is not executed;
- queued, i.e. the activity is in a queue including activities to be subsequently executed;
- ready to execute, i.e. the activity is in a state ready for execution;
- executing, i.e. the activity is running;
- finished, i.e. the activity has correctly ended;
- terminated, i.e. the activity has terminated without being finished completely;
- dead path status, i.e. the activity is in a dead path and does not come to an end;
- faulted, i.e. the activity has stopped with an execution fault.

The above defined states are states which are for example included in the BPEL specification.

In a preferred embodiment of the invention, the sets of rules managed by the rule engine are based on the well-known ECA rules which are event-condition-action rules defining an action to be performed on an event if a predetermined condition is met. Those rules are for example used in active databases for monitoring state changes in the database. One or more of the following actions may be included in these ECA rules:
- ignore an activity, i.e. proceed without any action;
- retry to execute an activity, i.e. start the activity once again;
- rebind an activity to another service when the activity starts the next time in the process;
- rollback an activity, i.e. compensate for the effects caused by executing the activity.

In a preferred embodiment of the method according to the invention, the sets of rules are defined in accordance with QoS levels (QoS = Quality of Service) enabling to bind an activity to a better service in case that some service levels are not met. Service levels are preferably defined in a service level agreement specified for the services.

In order to enable an efficient handling of events by the rules, an event preferably includes a specification of the name of the activity and the state to which the activity has changed according to the detected event. This specification is used by the rules in order to check corresponding conditions and apply actions in dependence on the specification of the event.

In a preferred embodiment, an event includes a specification of the response time of a service executing the corresponding activity. This response time is preferably used in order to define a corresponding rule which binds an activity to another service. Particularly, when the response time of the service exceeds a threshold defined in the condition of a corresponding ECA rule of the set of rules applied due to the detected event, the activity is rebound to another service having shorter response time upon the next start of the activity.

In another preferred embodiment of the method according to the invention, the services executing the activities are web services, each web service having a well-known WSDL-interface (WSDL = Web Service Description Language) defining the functional requirements of the activities to be executed by the web service. Those web services are preferably used in combination with a BPEL process.

In another embodiment of the invention, several detected events are combined to an event pattern communicated to the rule engine which applies a set of rules on the event pattern.

Besides the above method, the invention also refers to an apparatus for executing a process based on an XML process language, particularly a process based on the BPEL language, the process being handled by a process engine and including a plurality.of activities, each activity being executed by a corresponding service and changing its states during execution, wherein:
- the process engine is arranged such that:
   - one or more events referring to a change of the state of an activity are detected by the process engine, at least one of the events being associated with a language element including a rule identification from a plurality of rule identifications;
   - upon detection of at least one event associated with the language element, the at least one event is communicated by the process engine to a rule engine;
- the rule engine is arranged such that:
   - one or more sets of rules are managed by the rule engine, each set of rules including at least one rule and being specified by a rule identification from the plurality of rule identifications;
   - upon communication of the at least one event to the rule engine, a set of rules is applied by the rule engine on the process, the applied set of rules being that set of rules specified by the rule identification included in the language element with which the at least one event is associated.

The apparatus is preferably arranged such that any of the above defined embodiments of the method according to the invention may be performed by the apparatus.

Furthermore, the invention refers to a computer program product comprising a computer readable storage medium having encoded thereon computer-executable instructions for executing by a processor for performing any of the above defined variants of the method according to the invention.

Embodiments of the invention will now be described in detail with respect to the accompanying drawings wherein:
- Fig. 1: shows a schematic view illustrating the components for executing a BPEL process according to one embodiment of the invention;
- Fig. 2: shows action commands which may be performed in one embodiment of the invention on corresponding events; and
- Fig. 3: shows the relations of different states of a BPEL activity wherein the change of those states are detected as events according to the invention;

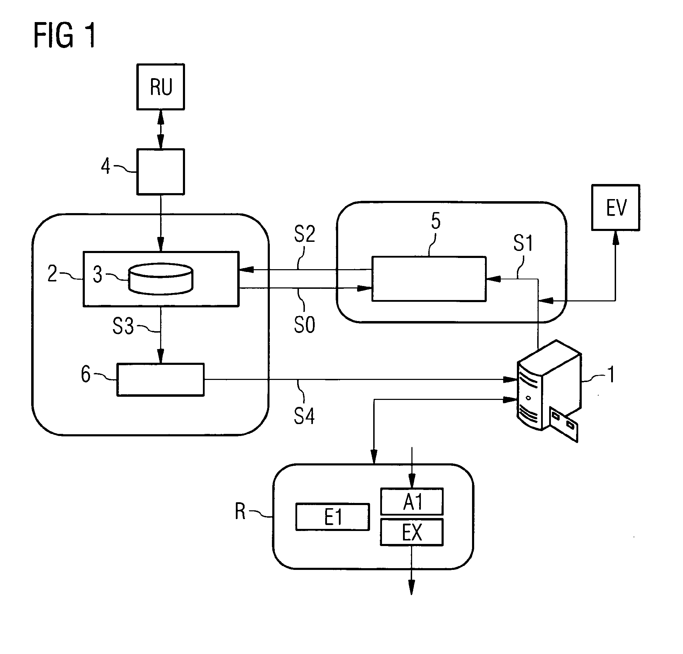

Fig. 1 illustrates the process of the invention on the basis of the well-known BPEL language. The process is written in this language and executed on a BPEL engine 1 which is a software environment executed on a personal computer or work station. A BPEL process defines a plurality of activities which are executed by corresponding web services. Those activities are referred to as port types and the web service are referred to as ports. The functional requirements of a port are described in a Web Services Description Language (WSDL) interface which is a well-known interface.

The process running on the engine 1 is an extended BPEL process comprising the BPEL extension element <rebinding> being described in European patent application 07014545.3 mentioned above. The extended BPEL process in Fig. 1 is illustrated in the rectangle R and shows an activity A1 which has changed to the state "executed" designated as EX in Fig. 1. This change of activity is associated with a corresponding rebinding element E1 defined as follows:

### <rebinding strategy="S100">

The rebinding element refers to the strategy S100 which is an identification of a corresponding rule as will be described below.

According to the BPEL specification, an event is generated each time an activity changes its state. Hence, when the activity A1 in Fig. 1 has changed to EX, a corresponding event EV generated. This event has the following syntax:
<event strategy="S100">
<activity name="A1" state="executed"
   response_time="9" />
</event>

According to the above syntax, the event has the same strategy S100 as the rebinding element E1. Furthermore, the event includes the activity name A1 und the state of the activity, namely the state "executed". Moreover, in the embodiment of Fig. 1, the response time of the executed activity A1, namely 9 ms, is detected and part of the syntax.

The BPEL engine 1 interacts with a rule engine 2 having a rules base 3 in the form of a database. The rule engine 2 is based on the well-known ECA rules which have been extensively explored within the active database community for monitoring state changes in database systems. The ECA rules have a high level, declarative syntax and can be easily analysed.

The syntax of an ECA rule in its abstract form is as follows:
On <event> if <condition> then <action>

I.e., an ECA rule automatically performs an action in response to an event provided that a corresponding guarding condition is met. The ECA rules are designated as RU in Fig. 1 and these rules were created by a corresponding rules editor 4 which is preferably a front-end graphical user interface. The created rules are stored in the rules base 3 of the rule engine 2.

The syntax for the rule based on the strategy S100 reads as follows:
<rule strategy="S100">
<event state="executed" />
<condition>
   <parameter name='response_time' />
   <expression parameter='response_time'>>25</expression>
</condition>
<action command="replace_on_next">
</event>

According to the above syntax, on the event that a state of an activity changes to "executed", the condition is checked whether the response time of the event is equal to or more than 25 msec. In case that this condition is met, the rule defines an action in the form of the command "replace_on_next". This means that the next time the activity changes to the state "executed", another faster web service is used for executing the activity.

The rule engine 2 interacts with a corresponding event component 5. As indicated by arrow S0, the events associated with corresponding rules are registered in the event component 5 before executing the BPEL process.

As mentioned above, the event EV associated with the strategy S100 is detected by the BPEL engine. This event is captured and communicated to the event component 5, as illustrated by arrow S1. An event pattern which may comprise more detected events is then transmitted to the rule engine 2, as illustrated by arrow S2. The rule engine then applies the above defined rule strategy S100 on the process. In the embodiment of Fig. 1, the response time of the event is 9 msec and, thus, the condition of the rule strategy S100 does not apply and the action command "replace_on_next" is not performed. However, in case that the event had a response time larger than 25 msec, the rule engine would apply the action "replace_on_next" by the use of a corresponding action component 6 which may be part of the rule engine 2. Applying the action is designated by the arrow S3 in Fig. 1. The action command will then rebind the activity A1 to another web service having a shorter response time upon the next start of the activity A1. This rebinding is indicated as arrow S4 in Fig. 1.

The ECA rules generated by the rules editor 4 are based on service terms, e.g. specified in a service level agreement between the provider of the BPEL engine and a corresponding customer. According to this service level agreement, the response time of an activity should not be faster than 25 msec, i.e. in case that the response time is longer, the port should be replaced on next execution of the activity by a port having shorter response time.

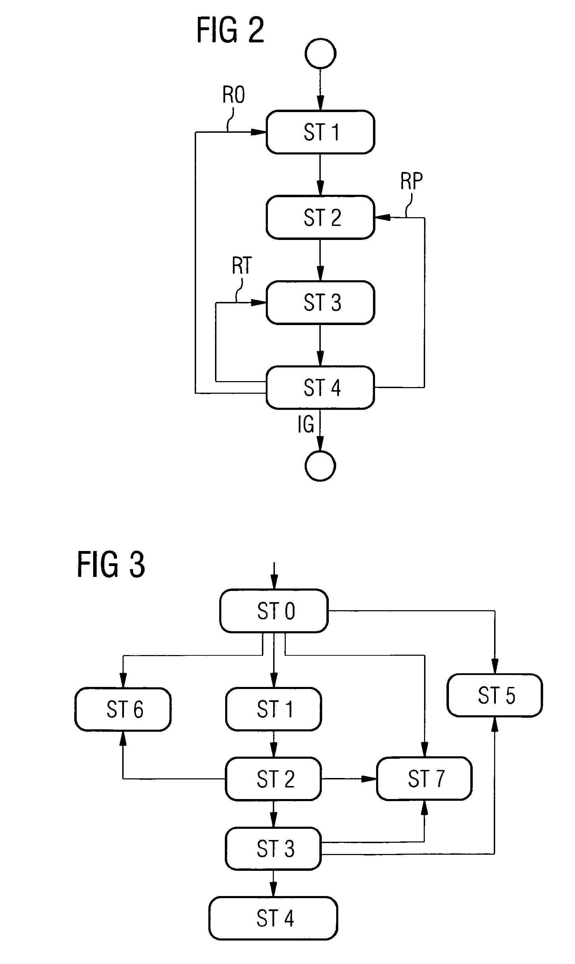

According to the above described embodiment, an action command "replace_on_next" is executed. This command instructs the activity to rebind to another web service. The command is particularly necessary in persistent conditions. Nevertheless, other commands may be defined in corresponding rules of the rule engine. Fig. 2 shows examples of relations between several action commands and states ST1, ST2, ST3 und ST4 of an activity. Those states are as follows:
state ST1 refers to a waiting state of an activity;
state ST2 refers to a state wherein the activity is bound "ready";
state ST3 refers to a state in which the activity is running;
state ST4 refers to a state in which the activity is finished.

According to Fig. 2, the action command RP referring to the aforementioned action "replace_on_next" may be executed in case that the activity is in the state S4. Furthermore, Fig. 2 shows the action command RT instructing the activity in state ST4 to retry execution by going back to state ST3. This command helps to handle transient situations that may not reoccur often. Moreover, on the event of a change of an activity to the state ST4, the command IG may be applied under certain conditions. This command refers to "ignore", i.e. simply proceed without any action. This is a suitable command for situations that will not seriously affect the final result. A another alternative, on the event of a status change of an activity to ST4, the command RO may be executed under certain conditions. This command refers to "rollback" and instructs the process to compensate for the effects caused by executing the activity.

The syntax of the above described ECA rules is only an example. E.g., the rules may be defined by the ECA rules engine RuleCore (http://www.rulecore.com). This engine provides a user friendly front-end to create rules and uses a language called RuleML to specify rules, events, conditions and actions.

Fig. 3 shows the relations of different states of a BPEL activity wherein the changes of those states generates events in a BPEL engine. Some of those states are similar to the states shown in Fig. 2 and, thus, will be indicated by the same reference numerals. A BPEL activity may be in the state "inactive" designated as ST0. The state "inactive" may change to the state TERMINATED designated as ST5 and indicating that the activity has terminated without finishing completely. Furthermore, the state ST0 may change to the state DEAD_PATH_STATUS designated as ST6 and indicating that the activity is in a dead path. Alternatively, the state ST0 may change to the state QUEUED_BY_PARENT designated as ST1 and indicating a queued activity or to the state EXECUTE_FAULT designated as ST7 and indicating a faulted activity. The state ST1 usually changes to the state ST2 referring to the state READY_TO_EXECUTE indicating that the activity is ready for execution. The activity state ST2 may go back to state ST6 referring to the state DEAD_PATH_STATUS or to the state ST7 referring to the state EXECUTE_FAULT.

Usually, the status ST2 goes to the status ST3 referring to the state EXECUTING indicating that the corresponding activity is running. The state EXECUTING may go back to the state ST7 referring to EXECUTE_FAULT or to the state ST5 referring to TERMINATED. If the activity has finished completely, the state ST3 goes to the state ST4 referring to EXECUTION_COMPLETE indicating that the execution of the activity is completed. The above defined states and their changes are well-known in the BPEL specification and, thus, are not described in more detail.

The invention as described before has several advantages. It provides modularity and flexibility because the business rules specified by the rule engine are separated from the logic execution. Hence, the rules can be changed again and again without the need to change the definition scripts of the BPEL process. Thus, there is no need to stop BPEL process which may have been running for a long time. This enables the modification of QoS offerings and service classes in agile manner according to evolving business conditions.

The method according to the invention provides higher business process availability. Particularly, the BPEL fault handling model is enhanced considerably. This is because much finer controlling and monitoring of corresponding QoS levels is possible. The inventive process handles exceptions and situations that are difficult or even impossible to detect with the existing BPEL fault model. Due to the rule engine, fault handling is completely separated from and transparent to the BPEL standard process.

According to the invention, a real-time monitoring and enforcement of service level agreements of each activity being executed is possible in order to verify that QoS levels are being satisfied as set up in the service level agreement.

The invention enables efficient accounting because data can be collected from each executed activity enabling a service provider to build his own billing information that can be used to verify the correctness of the bills issued later by partners.

The process according to the invention is easy to deploy. The ECA rules used in one embodiment are expressed in a high level syntax and can be created with user friendly front-end graphical user interfaces. Specialized BPEL knowledge is needless. Moreover, more complex strategies can be created by combining events and commands using logical operators like AND, OR or NOT. Such strategies are difficult to create and maintain using standard BPEL syntax.

## Claims

1. A method for executing a process based on an XML process language, particularly a process based on the BPEL language, the process being handled by a process engine (1) and including a plurality of activities (A1), each activity (A1) being executed by a corresponding service and changing its states (ST0, ST1, ..., ST7) during execution, wherein:
- one or more events (EV) referring to a change of the state of an activity (A1) are detected by the process engine (1), at least one of the events (EV) being associated with a language element (E1) including a rule identification from a plurality of rule identifications;
- upon detection of at least one event (EV) associated with the language element (E1), the at least one event (A1) is communicated to a rule engine (2), wherein the rule engine (2) manages one or more sets of rules (RU), each set of rules (RU) including at least one rule and being specified by a rule identification from the plurality of rule identifications;
- upon communication of the at least one event (EV) to the rule engine (2), a set of rules (RU) is applied on the process, the applied set of rules (RU) being that set of rules (RU) specified by the rule identification included in the language element (E1) with which the at least one event (EV) is associated.

2. The method according to claim 1, wherein the states (ST0, ST1, ..., ST7) of an activity (A1) include one ore more of the following states:
- inactive (ST0);
- queued (ST1);
- ready to execute (ST2);
- executing (ST3);
- finished (ST4);
- terminated (ST5);
- dead path status (ST6);
- faulted (ST7).

3. The method according to claim 1 or 2, wherein the language element (E1) is an extension of the BPEL language.

4. The method according to one of the preceding claims, wherein the sets of rules (RU) managed by the rule engine (2) are based on ECA rules, an ECA rule defining an action (A1) to be performed on an event (EV) if a predetermined condition is met.

5. The method according to claim 4, wherein one or more of the following actions are included in the ECA rules:
- ignore (IG) an activity (A1);
- retry (RT) to execute an activity (A1);
- rebind (RP) an activity (A1) to another service when the activity (A1) starts the next time in the process;
- rollback (RO) an activity (A1).

6. The method according to one of the preceding claims, wherein the sets of rules (RU) are defined in accordance with QoS levels, the levels preferably being defined in a service level agreement specified for the services.

7. The method according to one of the preceding claims, wherein an event (EV) includes a specification of the name of the activity (A1) and the state (ST0, ST1, ..., ST7) to which the activity (A1) has changed according to the event (EV).

8. The method according to one of the preceding claims, wherein an event (EV) includes a specification of the response time of a service executing the corresponding activity (A1).

9. The method according to claim 8 in combination with claim 4, wherein, when the response time of the service exceeds a threshold defined in the condition of a corresponding ECA rule of the set of rules (RU) applied due to the detected event (EV), the activity (A1) is rebound to another service having shorter response time upon the next start of the activity (A1).

10. The method according to one of the preceding claims, wherein the services executing the activities (A1) are web services, each web service having a WSDL-interface defining the functional requirements of the activities (A1) to be executed by the web service.

11. The method according to one of the preceding claims, wherein several detected events (EV) are combined to an event pattern communicated to the rule engine (2) which applies a set of rules on the event pattern.

12. An apparatus for executing a process based on an XML process language, particularly a process based on the BPEL language, the process being handled by a process engine (1) and including a plurality of activities (A1), each activity (A1) being executed by a corresponding service and changing its states (ST0, ST1, ..., ST7) during execution, wherein:
- the process engine (1) is arranged such that:
- one or more events (EV) referring to a change of the state of an activity (A1) are detected by the process engine (1), at least one of the events (EV) being associated with a language element (E1) including a rule identification from a plurality of rule identifications;
- upon detection of at least one event (EV) associated with the language element (E1), the at least one event (A1) is communicated by the process engine to a rule engine (2);
- the rule engine is arranged such that:
- one or more sets of rules (RU) are managed by the rule engine (2), each set of rules (RU) including at least one rule and being specified by a rule identification from the plurality of rule identifications;
- upon communication of the at least one event (EV) to the rule engine (2), a set of rules (RU) is applied by the rule engine (2) on the process, the applied set of rules (RU) being that set of rules specified by the rule identification included in the language element (E1) with which the at least one event (EV) is associated.

13. An apparatus according to claim 12, wherein the apparatus is arranged such that it can perform a method according to one of claims 2 to 11.

14. A computer program product comprising a computer readable storage medium having encoded thereon computer-executable instructions for executing by a processor for performing the method according to one of claims 1 to 11.
